# EUROPÄISCHE PATENTSCHRIFT

(11) **EP 2 186 754 B1**
(45) Veröffentlichungstag und Bekanntmachung des Hinweises auf die Patenterteilung: **26.10.2011**
(21) Anmeldenummer: 09014017.9
(22) Anmeldetag: 09.11.2009
(51) Int. Cl.: B65G 1/137

(54) **Kommissionieranlage und Verfahren zum Betreiben derselben mit einem Kommissionierwagen**
Picking system and method for operating same with a picking cart
Installation de préparation et son procédé de fonctionnement avec un chariot de préparation

(30) Priorität: 10.11.2008 DE 102008057630
(43) Veröffentlichungstag der Anmeldung: 19.05.2010
(73) Patentinhaber: Langen, Manfred, 41179 Mönchengladbach (DE)
(72) Erfinder: Langen, Manfred, 41179 Mönchengladbach (DE)
(74) Vertreter: Thomas, Stephan

(56) Entgegenhaltungen:
- EP-A1- 0 847 939
- WO-A1-2006/095047
- DE-A1-102007 019 455
- FR-A1- 2 713 612

## Beschreibung

Die vorliegende Erfindung betrifft eine Kommissionieranlage mit mindestens einem Regal, entlang welchem mit Hilfe eines Kommissionierwagens Artikel aus Lagerladehilfsmitteln in Auftragsladehilfsmittel kommissioniert werden, und zwar gemäß einem Kommissionierauftrag, der üblicherweise aus einer Vielzahl von verschiedenen Artikeln besteht, die in verschiedenen Anzahlen angefordert werden. Die vorliegende Erfindung betrifft ferner ein Verfahren zum Kommissionieren mit Hilfe eines Kommissionierwagens.

Es wird heutzutage grob zwischen zwei verschiedenen Prinzipien unterschieden, gemäß denen Kommissionieraufträge abgearbeitet werden können. Beim konventionellen Kommissionieren wurde früher häufig nach dem "Mann-zur-Ware"-Prinzip kommissioniert. Heute wird vorzugsweise nach dem Prinzip "Ware-zum-Mann" kommissioniert. Die vorliegende Erfindung arbeitet nach dem "Mann-zur-Ware"-Prinzip, wobei der Kommissionierer so weit wie möglich unterstützt wird, d.h. der Kommissioniervorgang wird mit Ausnahme des Greifens der Artikel und des Fortbewegens (Laufens) des Kommissionierers automatisiert.

Beim "Mann-zur-Ware"-Prinzip verbleiben die zu kommissionierenden Artikel üblicherweise an ihrem Lagerplatz. Der Kommissionierer arbeitet eine Kommissionierliste ab und bewegt sich von einem Lagerplatz zum anderen, entnimmt die Artikel und sammelt so die einzelnen Positionen des Auftrags nach und nach zu Fuß ein. In Paletten-Hochregallagem kann der Kommissionierer in einer Kabine stehend mit Hilfe eines Regalbedienfahrzeugs jeden Palettenlagerpiatz erreichen. Das Regalbediengerät ist entlang einer Regalgasse, die zwischen sich gegenüberliegenden Regalen liegt, in horizontaler Richtung beweglich. Das Regalbediengerät weist einen vertikalen Mast auf. Die Kabine ist in der Nähe eines Lastaufnahmemittel zum Transportieren von Auftragsladehilfsmittel, wie z.B. einer Auftragspalette, angeordnet und ist in vertikaler Richtung zusammen mit dem Lastaufnahmemittel entlang des Masts verfahrbar. Der Kommissionierer gibt über ein Bedienfeld Ziellagerplätze ein, die er anzufahren wünscht, woraufhin sich das Regalbediengerät dann dorthin bewegt. Am Ziellagerort angekommen, entnimmt der Kommissionierer die Anzahl von Artikeln, die ihm laut Kommissionierliste vorgegeben wird. Diese Vorgehensweise wird so oft wiederholt, bis alle Positionen auf der Kommissiortierliste abgearbeitet sind.

In Behälterlagern läuft der Kommissionierer üblicherweise durch die Regalgänge und entnimmt die erforderlichen Artikel aus den Behältern, die in Regallagerplätzen bevorratet werden. Jeder Regallagerplatz kann dabei mit einer Kennung (z.B. Nummer) versehen sein, die den jeweiligen Lagerplatz eindeutig identifiziert. Diese Art der Kommissionierung kann aber mitunter sehr lange dauern, insbesondere dann, wenn der Kommissionierer durch das gesamte Lager laufen muss.

Der Kommissionierer kann die entnommenen Artikel z.B. in einen Korb legen, den er mit sich trägt. Alternativ kann der Kommissionierer die entnommenen Artikel auf eine Palette auf einem Hubwagen legen, den er manuell mit sich durch die Regalgassen führt.

Ferner ist es bekannt, den Kommissionierer anstatt mit einer ausgedruckten Computerliste mit einem Funkterminal oder einem mobilen Datenterminal auszustatten. Das Terminal kann am Handgelenk befestigt werden und zeigt dem Kommissionierer den Ziellagerort sowie die zu entnehmende Artikelanzahl an. Optional kann das Terminal mit einem Lesegerät, wie z.B. einem Laser-Scanner, verbunden sein, um den Lagerort und/oder den zu entnehmenden Artikel einzuscannen und auf seine Korrektheit zu überprüfen. Dazu sind der Lagerort und/oder der Artikel mit entsprechenden Kennungen, wie z.B. Barcodes, versehen. Diese Maßnahmen erhöhen die Kommissioniersicherheit bzw. verringern Kommissionierfehler.

Wenn sog. "Pick-by-light"-Anzeigen eingesetzt werden, wird der Kommissionierer mit Hilfe von Displays durch das Lager geführt, um Artikel an Ziellagerorten zu entnehmen. Diese Anzeigen umfassen üblicherweise eine Signallampe sowie eine Ziffernanzeige, um dem Kommissionierer anzuzeigen, wie viele Artikel er aus dem Ziellagerort entnehmen muss. Dies geschieht z.B. derart, dass alle Pick-by-light-Anzeigen einer Regalgasse aktiviert werden, wenn der Kommissionierer die Regalgasse betritt. Der Kommissionierer kann dann selbst entscheiden, aus welchen Ziellagerorten er zuerst Artikel entnimmt. Nach einer erfolgten Entnahme kann der Kommissionierer die erfolgreiche Entnahme z.B. mit Hilfe einer Quittiertaste gegenüber einer übergeordneten Steuereinheit anzeigen. Die Quittiertaste kann ebenfalls Teil der Anzeige sein. Nach einer erfolgten Quittierung erlischt die Lampe der Anzeige. Der Kommissionierer arbeitet sich auf diese Weise durch die gesamte Regalgasse, bis alle Lampen erloschen sind Diese Art und Weise zu kommissionieren erfordert ein hohes Maß an Aufmerksamkeit beim Kommissionierer, damit er keinen Ziellagerplatz vergisst bzw. an einen falschen Ort greift, wenn er mehrmals Greifen muss, um eine Auftragsposition zu bearbeiten. Die Gefahr von Kommissionierfehlern erhöht sich zusätzlich, wenn aus beiden Seiten der Regalgasse Artikel zu entnehmen sind.

Muss der Kommissionierer die entnommenen Artikel z.B. in einen Korb legen, so wird der Korb mit zunehmender Kommissionierdauer immer schwerer, was den Kommissionierer unnötig anstrengt. Selbst wenn ein Kommissionierwagen eingesetzt wird, den der Kommissionierer durch das Lager schiebt, kann dies mitunter sehr kraftraubend sein.

Der verkabelungstechnische Aufwand ist mit zunehmender Lagergröße bzw. Anzahl der Lagerorte sehr groß. Jede "Pick-by-light"-Anzeige muss mit der übergeordneten Steuereinheit verbunden werden. Da die "Pick-by-light"-Anzeige aus sehr vielen einzelnen Komponenten besteht, ist das Risiko eines Ausfalls auch dementsprechend hoch. Eine Anzeige, bei der zwar z.B. die Lampe, nicht aber die Ziffemanzeige funktioniert, ist ebenfalls nicht zu gebrauchen. Für Wartungstechniker kann deshalb die Wartung sehr großer Anlagen sehr aufwändig werden, da üblicherweise jedes Regalfach über eine eigene "Pick-by-Light"-Anzeige verfügt.

Die EP 847 939 A1 beschreibt ein Verfahren und eine Vorrichtung zum Kommissionieren, wobei einem Lagerregal mit Fachanzeigen eine Fördertechnik zugeordnet ist. Dem Lagerregal sind Behälter zuführbar, aus denen ein Kommissionierer entsprechend einer Vorgabe Ware entnimmt und in einen Kommissionierbehälter (Kundenauftragsbehälter) gibt. Die Behälter sind zur Steigerung der Effizienz als Schnellläufer oder als Langsamläufer gekennzeichnet und werden entsprechend innerhalb der Vorrichtung verbracht. Das Verfahren arbeitet nach dem Prinzip Ware-zum-Mann; falsch kommissionierte Kommissionierbehälter können nicht ausgeschlossen werden.

Aus der DE 10 2007 019 455 A1 ist ein Kommissionierwagen (Transportroboter) mit Transportkisten zur Beladung aus Lagerkisten bekannt. Der Kommissionierwagen weist eine Anzeige auf, die eine aus einem Vorratsbehälter zu entnehmende Anzahl von Gegenständen anzeigen kann. Auch hier sind falsch kommissionierte Kommissionierbehälter nicht auszuschließen.

Die FR 2 713 612 A1 offenbart eine Vorrichtung zum Kommissionieren, bei dem eine Waage zum Wiegen des fertig kommissionierten Kommissionierbehälters angeordnet ist. Es kann so erst am Ende des Kommissioniervorgangs festgestellt werden, ob das Gesamtgewicht einem vorbestimmten Wert entspricht. Entsprechend muss bei einem Fehler der gesamte Inhalt des Kommissionierbehälters überprüft werden.

Es ist daher Aufgabe der Erfindung, eine Kommissionieranlage sowie ein Kommissionierverfahren vorzusehen, das nach dem "Mann-zur-Ware"-Prinzip funktioniert und das einfach aufgebaut ist, ergonomische Gesichtspunkte beim Kommissionieren stärker berücksichtigt sowie Fehler beim Kommissionieren sicher und schnell anzeigt.

Diese Aufgabe wird mit einer Kommissionieranlage gelöst, die: ein Regal; eine Fördertechnik, um Auftragsbehälter durch das Lager zu transportieren und mindestens einen Kommissionierplatz aufweist, an welchem Artikel manuell gemäß einem Kommissionierauftrag aus Lagerbehältem in einen der Auftragsbehälter gegeben werden, wobei der Kommissionierplatz einen am Regal geführten Kommissionierwagen und eine Vielzahl von Regalplätzen, in denen Lagerbehälter zur Entnahme von Artikeln platzierbar sind, aufweist, wobei der Kommissionierwagen eine Anzeigevorrichtung aufweist, die einem Kommissionierer eine Anzahl von aus einem Lagerbehälter zu entnehmenden Artikel anzeigt, und wobei jedem Regalplatz ein, vorzugsweise ein einziger, Signalgeber zugeordnet ist, der dem Kommissionierer anzeigt, aus welchem der Regalplätze gerade ein oder mehrere Artikel zur Abarbeitung des Kommissionierauftrags zu entnehmen ist bzw. sind und wobei der Kommissionierwagen eine Wägezelle aufweist.

Eine derart aufgebaute Kommissionieranlage bzw. ein derart konzipierter Kommissionierplatz erleichtert den Kommissioniervorgang erheblich. Auftragsbehälter werden automatisiert über die Fördertechnik in einem Kommissionierbereich befördert, der üblicherweise zumindest einem Abschnitt einer Entnahmeseite ("pick face") entspricht. Der Auftragsbehälter wird während eines gesamten Kommissioniervorgangs von unten gestützt, so dass der Kommissionierer den Auftragsbehälter nie tragen muss. Der Kommissionierer bekommt den Auftragsbehälter automatisch angeliefert und gibt den Auftragsbehälter nach erfolgreicher Abarbeitung des Kommissionierauftrags auch wieder an die Fördertechnik ab. Dies ist ergonomisch günstig.

Ein weiterer Vorteil ist darin zu sehen, dass die Anzeige der zu entnehmenden Artikel lediglich am Kommissionierwagen vorgesehen ist. Somit spart man sich die Zifferanzeigen an den Stellplätzen des Regals. Der Kommissionierer bekommt von einer übergeordneten Steuereinheit nur über die Anzeige am Wagen die jeweils zu entnehmende Anzahl von Artikeln angezeigt. Dazu leuchtet, vorzugsweise nur ein entsprechender Signalgeber (insbsondere eine Lampe) am Regalplatz auf. Der Kommissionierwagen wird automatisiert auf die Höhe derjenigen Regalsäule verfahren, in welcher der Zielregalplatz (Lagerbehälter) angeordnet ist. Diese Maßnahme verringert die Anzahl von Fehlkommissionierungen, da der Kommissionierer nicht versucht ist, in andere Stellplätze zu greifen, die gemäß dem Stand der Technik gleichzeitig beleuchtet waren.

Weiterhin weist der Kommissionierwagen zusätzlich eine Wägezelle auf.

Die Wägezelle dient zum Bestimmen des Leergewichts oder ist-Gewichts des Auftragsbehälters sowie des Gewichts von solchen Artikeln, die vom Kommissionierer gemäß einer Auftragszeile bzw. -position des Kommissionierauftrags in den Auftragsbehälter gegeben werden. Dazu sind in einer Datenbank die Einzelgewichte der verschiedenen Artikel hinterlegt. Das Einzelgewicht eines Artikels kann mit der Stückzahl der zu entnehmenden Artikel multipliziert werden, um das (zusätzliche) Gewicht der zu kommissionierenden Artikel vorab zu bestimmen. Die Wägezelle wiegt das Gewicht der gerade entnommenen Artikel und sendet diese Information an eine Auswerteeinheit, die das gemessene Gewicht mit dem vorgegebenen Gewicht vergleicht. In diesem Sinne wird ein Soll-Ist-Vergleich durchgeführt. Mit Hilfe der Wägezelle wird also die Kommissioniersicherheit erhöht. Sollte der Kommissionierer weniger oder mehr Artikel greifen, als tatsächlich zur Abarbeitung der Auftragszelle benötigt werden, kann ein derartiger Kommissionierfehler anhand der festgestellten Gewichtsdifferenz erkannt werden. Gleiches gilt, wenn der Kommissionierer einen falschen Artikeltyp greift. In der Regel unterscheiden sich die Gewichte der verschiedenen Artikeltypen, so dass selbst bei einer korrekten Anzahl von entnommenen Artikeln anhand des sich unterscheidenden Gesamtgewichts festgestellt werden kann, dass der gerade abzuarbeitende Kommissioniervorgang fehlerhaft ist. Dem Kommissionierer kann ein derartiger Fehler sofort im Wege einer Rückkopplung signalisiert werden, indem z.B. eine der Anzeigen blinkt. Alternativ könnte dem Kommissionierer mit Hilfe der Ziffernanzeige angezeigt werden, wie viele Artikel er zuviel oder zuwenig in den Auftragsbehälter gegeben hat. Sollten zuwenig Artikel kommissioniert worden sein, könnte dies mit einem voranstehenden Minuszeichen in der Ziffernanzeige signalisiert werden.

Gemäß einer bevorzugten Ausführungsform weist der Kommissionierwagen einen Antrieb auf, um sich selbsttätig entlang der Regalplätze zu bewegen.

In diesem Fall muss der Kommissionierwagen noch nicht einmal geschoben werden. Eine übergeordnete Steuereinrichtung kann den Kommissionierwagen veranlassen, sich zu bewegen. Der Kommissionierwagen wird dann vor den nächsten, abzuarbeitenden Regalplatz bzw. die entsprechende Regalsäule verfahren und hält dort an.

Insbesondere wird der Kommissionierwagen über eine Schleifleitung (Stromschiene) in einer (Kommissionierwagen-)Führungsschiene am Regal, über eine Schlappleitung oder von einem in dem Wagen integrierten Energiespeicher, vorzugsweise einer Batterie, einem Akku oder einem Superkondensator, mit Energie versorgt.

Der Kommissionierwagen ist in diesem Sinne autark und kann sich so selbstständig bewegen. Bei der Lösung, bei der Energiespeicher verwendet werden, stören Energieversorgungsleitungen den Kommissioniervorgang nicht. Weder muss der Kommissionierer über solche Leitungen greifen, noch muss er über Leitungen steigen. Diese Maßnahme erhöht die Sicherheit am Kommissionierplatz. Das Aufladen der Energiespeicher kann z.B. an dem Ort geschehen, wo der Auftragsbehälter mit der Fördertechnik ausgetauscht wird.

Gemäß einer weiteren vorteilhaften Ausgestaltung wird der Kommissionierwagen mittels eines externen Antriebs, vorzugsweise mit einem extern angetriebenen Zahnriemen, bewegt.

Ein externer Antrieb hat den Vorteil, dass das Gewicht des Kommissionierwagens gegenüber der Variante reduziert ist, bei der der Antrieb in den Kommissionierwagen selbst integriert ist. Ein weiterer Vorteil ist darin zu sehen, dass bei der Variante mit extern angetriebenem Zahnriemen mehrere Kommissionierwagen von ein und demselben Antrieb angetrieben werden können. Insbesondere wenn mehrere Kommissionierzonen jeweils mit einem Kommissionierwagen hintereinander geschaltet betrieben werden, kann die eben genannte Variante von Vorteil sein. Mehrere Kommissionierzonen liegen z.B. dann vor. wenn eine Längsseite eines Regals in mehrere, autarke Bereiche aufgeteilt wird.

Ferner hat es sich als gut herausgestellt, wenn der Kommissionierplatz ein zweites Regal aufweist, welches derart gegenüberliegend zum ersten Regal angeordnet ist, dass zwischen den Regalen eine Kommissioniergasse gebildet wird, und wenn der Kommissionierwagen insbesondere eine Richtungsanzeige aufweist, um dem Kommissionierer anzuzeigen, aus welcher Regalseite Artikel zu entnehmen sind.

Bei dieser Art der Anordnung der Regale kann die Anzahl der Regalplätze bzw. Stellplätze für Lagerbehälter bei gleichbleibender Ausdehnung des Kommissionierplatzes erheblich vergrößert werden. Der Kommissionierer entnimmt Artikel nicht nur von einer Regalseite, sondern auch von einer gegenüberliegenden Regalseite. Das Artikelsortiment, welches an einem Kommissionierplatz bereitgestellt werden kann, lässt sich so erheblich vergrößern. Kommissionieraufträge, die sehr viele verschiedene Artikel enthalten, können auf diese Weise an einem einzigen Kommissionierplatz bzw. an nur sehr wenigen Kommissionierplätzen abgearbeitet werden. Dadurch verringert sich die Kommissionierzeit.

Die Richtungsanzeige erleichtert das Auffinden des Regal- bzw. Stellplatzes, wo der Lagerbehälter bevorratet ist, aus welchem die zu entnehmenden Artikel vom Kommissionierer gegriffen werden.

Bei einer weiteren bevorzugten Ausgestaltung weist der Kommissionierwagen zusätzlich eine Code-Leseeinheit, insbesondere einen Barcode-Scanner oder ein RFID-Lesegerät auf.

Die Leseeinheit kann sowohl zum Identifizieren des Auftragsbehälters als auch der gerade entnommenen Artikeltypen verwendet werden. Beide Maßnahmen erhöhen wiederum die Kommissioniersicherheit. Dazu kann der Auftragsbehälter z.B. mit einem Barcode oder einem RFID-Transponder versehen sein. Gleiches gilt für die zu entnehmenden bzw. zu kommissionierenden Artikel. Sobald ein neuer Auftragsbehälter auf den Kommissionierwagen bewegt wird, kann der Kommissionierer eine Überprüfung veranlassen, ob auch der richtige Auftragsbehälter gerade an seinen Kommissionierwagen gegeben wurde. Dies ist insbesondere im Zusammenhang mit einer Teilkommissionierung eines Auftragsbehälters von Relevanz.

Zusätzliche Sicherheit gewinnt man, wenn die gerade zu entnehmenden Artikel anhand ihres Barcodes oder Ähnlichem überprüft werden, bevor sie in den zugeordneten Auftragsbehälter abgegeben werden. Da der Kommissionierablauf üblicherweise von einer übergeordneten Steuereinrichtung vorgegeben wird, kann wiederum ein Soli-Ist-Vergleich durchgeführt werden, wobei in diesem Fall die Richtigkeit des gerade kommissionierten Artikeltyps (oder die Behälternummer) überprüft wird.

Vorzugsweise weist der Kommissionierwagen ferner ein Distanzmessgerät auf.

Das Distanzmessgerät wird dazu verwendet, um den aktuellen Ort des Kommissionierwagens relativ zum Regal bzw. innerhalb des Kommissionierplatzes zu bestimmen. Da der Kommissionierwagen vorzugsweise von einer übergeordneten Steuereinrichtung so nah wie möglich zum nächsten Regalplatz bewegt wird, der den Lagerbehälter speichert, aus dem als nächstes Artikel zu entnehmen sind, ist es ratsam, dass die übergeordnete Steuereinrichtung jederzeit Kenntnis vom aktuellen Aufenthaltsort des Kommissionierwagens hat.

Als Distanzmessgerät kann z.B. ein Drehgeber (Multiturn-Geber) eingesetzt werden, der mit einer Laufachse des Kommissionierwagens verbunden ist, um die Anzahl von Umdrehungen zu zählen. Aus der Anzahl der bestimmten Umdrehungen kann dann auf den innerhalb des Kommissionierplatzes vom Kommissionierwagen zurückgelegten Weg rückgeschlossen werden. Alternativ kann ein Laserdistanzmessgerät eingesetzt werden, welches eine Entfernung des Kommissionierwagens zu einem innerhalb des Kommissionierplatzes festgelegten Nullpunkt bestimmt. Andere Distanzmessgeräte können ebenfalls eingesetzt werden.

Der Kommissionierwagen weist insbesondere ein Positionierungssystem auf. Das Positionierungssystem kann ebenfalls zur Bestimmung des Aufenthaltsorts des Kommissionierwagens innerhalb des Kommissionierplatzes bestimmt werden. Als Positionierungssystem kann z.B. ein Transceiver für ein lokales Positionierungssystem (LKS) zur drahtlosen Bestimmung des Aufenthaltsorts des Kommissionierwagens innerhalb einer Halle benutzt werden, wobei die räumliche Lage und Dimension des Kommissionierplatzes innerhalb der Halle ebenfalls bekannt sind. Alternativ könnte ein optisches Lesegerät eingesetzt werden, welches z.B. eine an einer Führungsschiene des Kommissionierwagens angebrachte Entfernungsskala abtastet. Die Entfernungsskala kann z.8. die absolute Entfernung zu einem Nullpunkt des Verfahrwegs des Kommissionierwagens angeben. Ebenso ist es aber möglich, jeder Regalsäule bzw. jedem Regalplatz eine Halteposition in Form eines Markers zuzuordnen, an welcher der Kommissionierwagen jeweils anzuhalten ist. Die Halteposition kann wiederum z.B. optisch erkannt werden, indem am Regal oder an der Führungsschiene ein reflektierendes Element, wie z.B. ein Spiegel, angebracht wird, der den Strahl eines Lichttasters des Positionierungssystems in einen entsprechend angeordneten Empfänger des Positionierungssystems reflektiert. Das Positionierungssystem kann bei dieser Art der relativen Positionsbestimmung zusätzlich einen Zähler aufweisen, um eine Anzahl von bereits angefahrenen Haltepositionen mitzuzählen. Auf diese Weise ist es ebenfalls möglich, den Ort des Kommissionierwagens innerhalb des Kommissionierplatzes zuverlässig zu bestimmen.

Außerdem ist es von Vorteil, wenn der Kommissionierwagen ferner eine Zeigeeinrichtung, wie z.B. einen Laserpointer, aufweist.

Mit Hilfe der Zeigeeinrichtung kann dem Kommissionierer optisch angezeigt werden, und zwar vom Kommissionierwagen aus, welcher Regal- bzw. Stellplatz den Lagerbehälter enthält, aus welchem die nächsten Artikel zu entnehmen sind. In diesem Fall fungiert die Zeigeeinrichtung als Signalgeber. Das Vorsehen von Lampen oder Ähnlichem am Regal selbst ist dann nicht mehr erforderlich.

Diese Maßnahme hat den Vorteil, dass weitere Elemente eingespart werden. Dies reduziert die Fehleranfälligkeit sowie den Wartungsaufwand. Der Kommissionierwagen ist in diesem Sinne autark und stellt die einzige Instanz dar, welche benötigt wird, um einzelne Kommissioniervorgänge durchzuführen. Der Kommissionierwagen fährt vorzugsweise selbstständig an eine zugeordnete Halteposition, zeigt dem Kommissionierer z.B. mittels eines Laserstrahls den Behälter an, aus welchem Artikel zu entnehmen sind, und zeigt dem Kommissionierer die Anzahl der zu entnehmenden Artikel an. Eine übergeordnete Steuereinrichtung kommuniziert in diesem Sinne also nur noch über den Kommissionierwagen mit dem Kommissionierer. Die Regalplätze müssen nicht mehr beschriftet oder auf eine sonstige Weise gekennzeichnet werden. Der Installationsaufwand bei der Errichtung des Lagers bzw. des Kommissionierplatzes ist sehr gering, da die übergeordnete Steuereinrichtung nicht mehr mit den einzelnen Regalplätzen kommunizieren muss bzw. mit ihnen verbunden sein muss. Dies reduziert auch die Investitionskosten.

Der Kommissionierwagen weist insbesondere eine Quittiertaste auf.

Mit der Quittiertaste kann der Kommissionierer einer übergeordneten Steuereinrichtung signalisieren, dass ein (Tei-)Kommissioniervorgang abgeschlossen ist. Dieses Signal veranlasst die übergeordnete Steuereinrichtung dazu, alle Vorbereitungen für die Abarbeitung der nächsten Auftragszeile durchzuführen. Sollte es noch weitere Auftragszeilen geben, kann der Kommissionierwagen entweder zu einer nächsten Halteposition verfahren werden oder am aktuellen Ort verweilen, sollen Artikel aus der gleichen Regalsäule, aber aus einem anderen Lagerbehälter entnommen werden. Sind alle Auftragszeilen eines Kommissionierauftrags abgearbeitet, kann die Steuereinrichtung den Transport des nunmehr fertigen Auftragsbehälters zu einem Übergabepunkt veranlassen. Am Übergabepunkt wird der fertige Auftragsbehälter auf eine Einschleusstrecke überführt, die in die Fördertechnik mündet. Die Fördertechnik kann den fertigen Auftragsbehälter dann in einen Versandbereich der Gesamtanlage transportieren.

Bei einer weiteren bevorzugten Ausgestaltung weist der Kommissionierwagen ein Tastenfeld auf, mit dem einer übergeordneten Steuereinheit eine Anzahl tatsächlich entnommener Artikel signalisiert werden kann, sollte der entnommene Artikel nicht in einer benötigten Anzahl vorhanden sein.

In Kommissionieranlagen kommt es immer wieder vor, dass der Ist-Bestand vom Soll-Bestand divergiert. Somit ist es möglich, dass nicht jede Auftragszeile gemäß dem Kommissionierauftrag abgearbeitet werden kann, obwohl die übergeordnete Steuereinheit davon ausgeht, dass ausreichend Artikel vorhanden sind. In diesem Fall entnimmt der Kommissionierer die restlichen Artikel aus dem Lagerbehälter und signalisiert der übergeordneten Steuereinheit mit Hilfe des Tastenfelds entweder die Anzahl der tatsächlich entnommenen Artikel oder die Anzahl der Artikel, die nicht entnommen werden konnten. Das Tastenfeld kann z.B. in Form einer Plustaste und einer Minustaste realisiert sein. Das Tastenfeld könnte auch in Form eines Nummernblocks mit zugehöriger Eingabetaste realisiert sein.

Weiterhin ist es von Vorteil, wenn eine übergeordnete Steuereinrichtung vorgesehen ist, die eingerichtet ist, den Kommissionierwagen dazu zu veranlassen, sich nach einer erfolgreichen Entnahme eines ersten Artikels vor, vorzugsweise direkt vor, einem Regalplatz zu positionieren, der einen Lagerbehälter mit zweiten Artikeln speichert, die als Nächstes zu entnehmen sind.

Der Kommissionierer muss sich dann überhaupt nicht um den Kommissionierwagen kümmern. Der Kommissionierwagen zeigt dem Kommissionierer bereits vorab an, in welchem Bereich sich der Lagerbehälter befindet, aus welchem die nächsten Artikel zu entnehmen sind. Dies erhöht wiederum die Kommissioniersicherheit. Der Kommissionierer muss die bereits kommissionierten Artikel nicht mit sich führen, was ihn wiederum körperlich entlastet.

Die Fördertechnik verläuft insbesondere innerhalb des Regals oder angrenzend an das Regal und ist über eine Ausschleusstrecke und eine Einschleusstrecke mit einer Strecke (Kommissionierstrecke) verbunden, auf der der Kommissionierwagen entlang einer Regalentnahmeseite des Kommissionierplatzes geführt ist.

Die Ein- und/oder Ausschleusstrecke ist wesentlich kürzer und räumlich kleiner als die im Stand der Technik verwendete Kommissionierbahnhöfe (zweite Fördertechnikstrecke parallel zur allgemeinen Fördertechnik im Regal). Es wird somit weniger Fördertechnik verbaut. Dies senkt die Anschaffungskosten. Außerdem gewinnt man im Regal Platz, um weitere Lagerbehälter bereitzustellen. Sind Ausschleusstrecke und Einschleusstrecke getrennt - und vorzugsweise parallel - zueinander angeordnet, können diese als Staustrecken eingesetzt werden. Staustrecken stellen einen Puffer dar und ermöglichen so eine zügigere Handhabung der Auftragsbehälter in der Gesamtanlage. Während ein Auftragsbehälter am Kommissionierplatz bearbeitet wird, kann der nächste Auftragsbehälter bereits aus der Fördertechnik ausgeschleust und vor einem Übergabeplatz wo der Auftragsbehälter auf den Kommissionierwagen bewegt wird, positioniert werden. Fertig kommissionierte Auftragsbehälter des Kommissionierplatzes können aus der Kommissionierstrecke ausgeschleust werden und in der Einschleusstrecke für die Hauptfördertechnik gepuffert werden, um den fertig kommissionierten Auftragsbehälter zum richtigen Zeitpunkt an die Fördertechnik abzugeben.

Außerdem hat es sich als vorteilhaft herausgestellt, wenn die (Kommissionier-)Strecke eine oder mehrere Führungsschienen aufweist, die im Wesentlichen parallel zur Regalentnahmeseite verlaufen, und wenn die Steuereinrichtung eingerichtet ist, Auftragsbehälter aus der Fördertechnik über die Ausschleusstrecke auf den Kommissionierwagen auszuschleusen und nach einer abgeschlossenen Kommissionierung über die Einschleusstrecke auf die Fördertechnik einzuschleusen.

Die Führungsschienen verhindern, dass der Kommissionierer den Weg des Kommissionierwagens von außen beeinflussen muss, um den Kommissionierwagen an einer vorgesehenen Halteposition anzuhalten. Die Führungsschienen ermöglichen eine selbstständige Bewegung des Kommissionierwagens. Die Führungsschienen sind dazu vorzugsweise in der Nähe der Entnahmeseite des Regals angeordnet, so dass erstens die Wege innerhalb des Kommissionierbereichs bzw des Kommissionierplatzes für den Kommissionierwagen recht kurz werden und zum anderen die Entfernungen zwischen den Lagerbehältern und dem gerade zu bearbeitenden Auftragsbehälter möglichst kurz sind. Dies ist aus ergonomischen Gesichtspunkten günstig. Der Kommissionierer muss während der Entnahme der Artikel keine welten Wege zurücklegen. Der Kommissionierer muss lediglich mit dem Kommissionierwagen mitlaufen, während dieser sich selbstständig durch den Kommissionierplatz bewegt.

Selbst das Einschleusen und Ausschleusen des Auftragsbehälters in die (Haupt-)Fördertechnik erfolgt vorzugsweise automatisiert. Der Kommissionierer muss also lediglich Artikel entnehmen. Die Übergabe der Auftragsbehälter, seien sie voll oder leer, erfolgt kraftunterstützt, was für den Kommissionierer aus ergonomischen Gesichtspunkten besonders günstig ist.

Ferner ist es bevorzugt, wenn die Steuereinrichtung eingerichtet ist, den Kommissionierwagen dazu zu veranlassen, dass er auf Höhe eines gerade zu bearbeitenden Lagerbehälters verfahren wird, dass ein Regalplatz angezeigt wird, der den gerade zu bearbeitenden Lagerbehälter gespeichert hat, und dass eine Anzahl von gerade zu entnehmenden Artikeln angezeigt wird.

Somit sind alle wesentlichen Vorgänge, die zur Abarbeitung einer Auftragszeile durchzuführen sind, automatisiert. Dies verringert die Anzahl von möglichen Kommissionierfehlem. Die Kommissioniersicherheit wird gesteigert.

Bei einer weiteren vorteilhaften Ausgestaltung weist jeder der Signalgeber jeweils eine Lampe auf, wobei jeder Regalplatz eine eigene Lampe hat.

Jeder Regalplatz kann individuell angezeigt werden. Der Kommissionierer weiß also immer, aus welchem Regalplatz bzw. welchem Lagerbehälter, der dort bereitgestellt wird, er den nächsten Artikel zu greifen hat. Dies erhöht wieder die Kommissioniersicherheit.

Die oben erwähnte Aufgabe wird ferner durch ein Verfahren zum Abarbeiten eines Kommissionierauftrags in einer Kommissionieranlage gelöst, die insbesondere gemäß einem der vorhergehenden Ansprüche eingerichtet ist, wobei das Verfahren die folgenden Schritte aufweist: Ausschleusen eines Auftragsbehälters auf einen Kommissionierwagen; Betätigen eines Antriebs des Kommissionierwagens derart, dass der Kommissionierwagen geführt an einen Regalplatz verfahren wird und davor angehalten wird, der wiederum einen Lagerbehälter mit gerade zu entnehmenden Artikeln enthält; Anzeigen des Regalplatzes am Regal, der die gerade zu entnehmenden Artikel enthält; Anzeigen einer Anzahl von gerade zu entnehmenden Artikeln am Kommissionierwagen und Entnehmen der Artikel; Wiederholen der vorhergehenden Schritte mit Ausnahme des Ausschleusschritts, bis alle Artikel eines Kommissionierauftrags entnommen sind; Einschleusen des fertig kommissionierten Auftragsbehälters in eine Fördertechnik.

Alle Vorgänge, die zum Abarbeiten eines Kommissionierauftrags durchgeführt werden müssen, sind mit Ausnahme des Entnahmevorgangs des Artikels aus einem Lagerbehälter sowie des Abgebens in einen Auftragsbehälter automatisiert. Der Behälter wird automatisch angeliefert, auf den Kommissionierwagen abgegeben und durch den Kommissionierplatz geführt. Nach einem erfolgreichen Abschluss eines Kommissionierauftrags wird der gefüllte Auftragsbehälter wiederum automatisch aus dem Kommissionierplatz herausbewegt und an die Fördertechnik abgeben.

Die Fehlerquote ist äußerst gering. Kommissionierfehler sind nahezu ausgeschlossen. Der Kommissionierer kann korrigierend eingreifen, sollte es Fehler im Datenbestand der gelagerten Artikel geben. Die Führung des Kommissionierers durch das Lager bzw. durch den Kommissionierplatz, der einen Teilbereich des Regals darstellt, ist äußerst einfach und effizient. Der Kommissionierer wird nicht von einer Vielzahl von beleuchteten Regalplätzen abgelenkt, wie es im Stand der Technik der Fall ist.

Insgesamt ist das Kommissionierverfahren gemäß der vorliegenden Erfindung äußerst ergonomisch und effizient. Ein weiterer Vorteil ist in dem geringen Wartungsaufwand sowie geringeren Investitionskosten bei der Anschaffung eines Kommissionierplatzes zu sehen, mit dem das erfindungsgemäße Kommissionierverfahren durchgeführt werden kann.

Die Kommissionierqualität lässt sich bei fallenden Investitionskosten effektiv steigern.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Ausführungsbeispiele der Erfindung sind in der Zeichnung dargestellt und werden in der nachfolgenden Beschreibung näher erläutert. Es zeigen:
- Figur 1: eine Seitenansicht eines Kommissionierplatzes gemäß der vorliegenden Erfindung, der hier in einer Kommissioniergasse zwischen zwei Regalen realisiert ist;
- Figur 2: eine Ansicht auf eine Längsseite eines Regals, das eine Entnahmeseite für mehrere Kommissionierplätze gemäß der Erfindung vorsieht;
- Figur 3A: eine Vorderansicht eines Kommissionierwagens mit aufgeladenem Auftragsbehälter,
- Figur 3B: eine Draufsicht auf den Kommissionierwagen der Figur 3A;
- Figur 4: eine Seitenansicht eines abgewandelten Kommissionierplatzes, ähnlich der Figur 1;
- Figur 5: eine Draufsicht auf isoliert dargestellte Fördertechnikkomponenten des Kommissio- nierplatzes gemäß der vorliegenden Erfindung; und
- Figur 6: ein Flussdiagramm des Kommissionierverfahrens gemäß der vorliegende Erfindung.

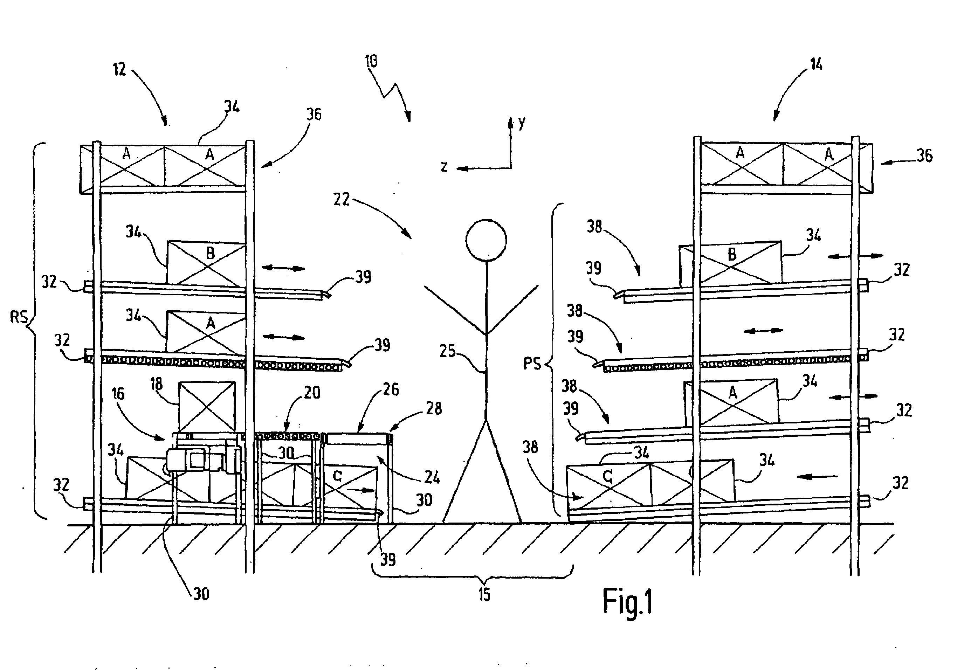

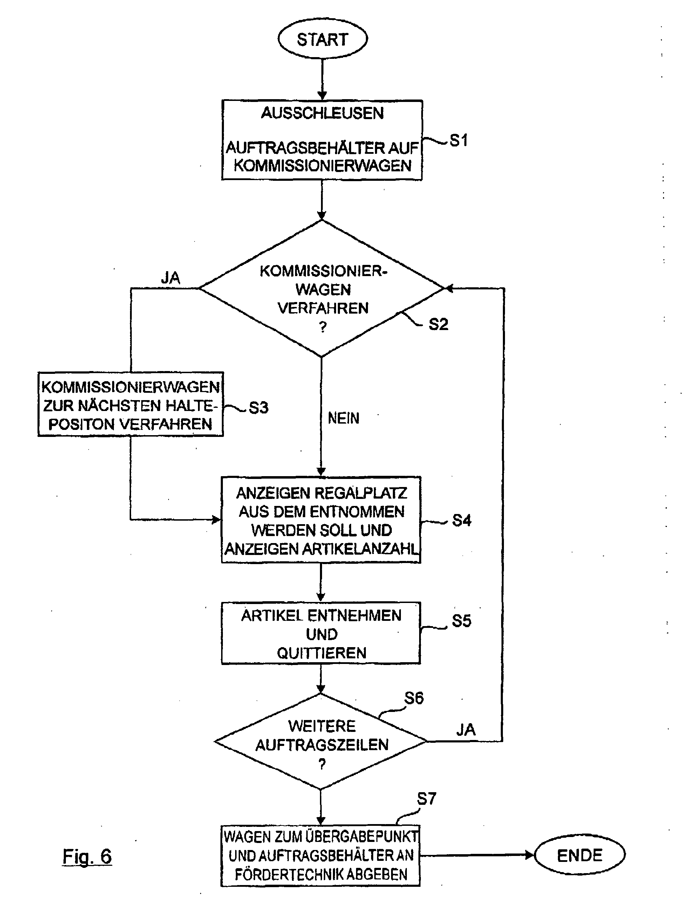

Die nachfolgend detailliert beschriebene Erfindung betrifft allgemein einen Kommissionierplatz 22 (Fig. 1) sowie ein Kommissionierverfahren 100 (Fig. 6). Der erfindungsgemäße Kommissionierplatz 22 ist üblicherweise Teil einer Kommissionieranlage 10, die üblicherweise ein Regallager aufweist. Wenn im Nachfolgenden von einem Kommissionierplatz gesprochen wird, so ist damit eine Ansammlung von Komponenten gemeint, wie sie in der Lager-, Kommissionier- und/oder Fördertechnik eingesetzt werden. Die Begriffe Kommissionierplatz, Kommissionierzone und Kommissionierbereich sind äquivalent und beschreiben unter anderem einen Raum, in welchem die oben genannten Komponenten zum Zwecke der Abarbeitung eines Kommissionierauftrags angeordnet sind. Ein Kommissionierauftrag besteht üblicherweise aus einer Vielzahl von Auftragszeilen. Jede Auftragszeile gibt eine Anzahl von zu kommissionierenden Artikeln eines bestimmten Artikeltyps wieder. Kommissionieraufträge können sehr groß sein, so dass an einem einzigen Kommissionierplatz immer nur Teile des Gesamtauftrags bearbeitet werden können. Im Nachfolgenden wird zwischen einer Abarbeitung eines Teilauftrags und des gesamten Auftrags nicht mehr unterschieden werden, da Auftragsbehälter, die bereits teilweise aufgrund eines abgearbeiteten Teilauftrags gefüllt sind, über eine Fördertechnik von einem Kommissionierplatz zu einem anderen Kommissionierplatz transportiert werden können. Dort werden die bereits vorgefüllten Auftragsbehälter wie ein neuer (leerer) Auftragsbehälter behandelt.

Wenn im Nachfolgenden von Auftragsbehältem und Lagerbehältern die Rede ist, so sind diese Begrifflichkeiten ebenfalls nicht einschränkend zu sehen. Die vorliegende Erfindung kann auf jegliches Ladehilfsmittel (z.B. Tablare, Paletten, Behälter, Hängeförderer, etc.) angewendet werden. Ähnliches gilt für den Begriff "Regalplatz". Mit einem Regalplatz ist ein Stellplatz für ein Ladehilfsmittel in einem Regal zu verstehen, üblicherweise der vorderste Platz, der auf der Entnahmeseite des Regals liegt. Dabei macht es keinen Unterschied, ob z.8. ein Fachbodenregal oder ein Palettenhochregal eingesetzt wird. Die vorliegende Erfindung eignet sich jedoch besonders gut, wenn sie in einem Behälterregallager eingesetzt wird. Dabei macht es wiederum keinen Unterschied, ob Einzel- oder Doppelregale eingesetzt werden, ob in einer Regalgasse oder nur entlang einer bestimmten Seite, vorzugsweise der Längsseite, des Regals kommissioniert wird oder ob z.B. in mehreren Etagen eines Regals übereinander kommissioniert wird. Üblicherweise werden Artikel aus Lagerbehältern entnommen, die entlang einer Längsseite des Regals - relativ zueinander - übereinander und/oder untereinander angeordnet sind, Diese Regalseite nennt man auch Entnahmeseite ("pick face").

Bezug nehmend auf Fig. 1 ist eine Kommissionieranlage 10 und insbesondere ein Kommissionierplatz 22 gemäß der vorliegenden Erfindung gezeigt. Die Fig. 1 zeigt einen Blick auf eine Stirnseite eines hier nicht näher gezeigten und bezeichneten Regallagers, in welchem der Kommissionierplatz 22 vorzugsweise angeordnet ist. Die Kommissionieranlage 10 weist mindestens ein Regal 12 auf. In der Fig. 1 sind zwei sich gegenüberstehende Regale 12 und 14 gezeigt. Im Bereich des ersten Regals 12 ist eine Fördertechnik 16, hier speziell ein angetriebener Rollenförderer, gezeigt. Mit Hilfe der Fördertechnik 16 können innerhalb und außerhalb der Regale 12, 14 Auftragsbehätter 18 durch die Anlage 10 transportiert werden. Die Auftragsbehälter 18 können über eine Ein-/Ausschlausstrecke 20, hier ebenfalls einen Rollenförderer, in einen Arbeitsbereich des Kommissionierplatzes 22 transportiert werden, wo insbesondere eine (fördertechnische) Kommissionierstrecke 24 angeordnet ist. In diesem Arbeitsbereich, der im Wesentlichen durch eine Regalgasse 15 zwischen den Regalen 12 und 14 definiert ist, arbeitet ein Kommissionierer 25.

Leere oder teilgefüllte Auftragsbehälter 18 werden über die Ein-/Ausschleusstrecke 20 zur Kommissionierstrecke 24 transportiert, wo der Auftragsbehälter 18 auf einen Kommissionierwagen 26 abgegeben wird, der entlang von Führungsschienen 28 beweglich gelagert ist, wie es nachfolgend noch detaillierter beschrieben werden wird.

Die Fördertechnik 16, die Ein-/Ausschleusstrecke 20 sowie die Kommissionierstrecke 24 können mit Hilfe eines Gestells 30 vorzugsweise zwischen Knie- und Hüfthöhe eines durchschnittlichen Kommissionierers 25 (1,80 m Körpergröße) angeordnet sein. Berücksichtigt man zusätzlich die Höhe der Auftragsbehälter 18, so ergibt sich eine ergonomische Gestaltung des Kommissionierplatzes 22, wenn man den oberen, offenen Rand des Auftragsbehäfters 18 so anordnet, dass der Kommissionierer 25 Artikel in den Auftragsbehälter 18 geben kann, ohne sich wesentlich bücken zu müssen. Ähnlich gut ist es, wenn man über z.B. Schwerkraftbahnen (Gefällebahnen) 32, die hier Teil der Regale 12, 14 sind, Lagerbehälter 34 bereitstellt. Aus den Lagerbehältern 34 kann der Kommissionierer 25 Artikel entnehmen und diese in die Auftragsbehälter 18 abgeben.

In der Fig. 1 ist das linke Regal 12 mit drei Schwerkraftbahnen 32 versehen. Das rechte Regal 14 weist vier Schwerkraftbahnen 32 auf. Die mittleren Schwerkraftbahnen der Regale 12 und 14 in Brusthöhe des Kommissionierers 25 sind hier exemplarisch als Rollenbahnen ausgeführt. Die restlichen Schwerkraftbahnen 32, die eine leichte Neigung gegenüber der Horizontalen in Richtung der Regalgasse 15 aufweisen, sind Gleitbahnen, auf denen die Lagerbehälter 34 in Richtung des Kommissionierers 25 bewegt werden. Die Bewegung erfolgt mittels der Schwerkraft selbstständig. Eine Rückwärtsbewegung kann kraftunterstützt erfolgen.

Im oberen Bereich der Regale 12, 14 sind ooptional statische Lagerplätze 36 gezeigt. Die statischen Lagerplätze 36 dienen zur (Langzeit-)Lagerung von Lagerbehältern 34 und insbesondere als Nachschublager für die Regal- bzw. Stellplätze 38 in den Schwerkraftbahnen 32. Es versteht sich, dass anstatt von Schwerkraftbahnen auch herkömmliche Regalböden bzw. Regalkanäle verwendet werden können, wobei in diesem Fall der Nachschub bzw. der Austausch von Lagerbehältern 34, insbesondere beim Bereitstellen der Lagerbehälter 34, durch zusätzliche, äußere Krafteinwirkung erfolgen muss, z.B. durch Einschieben von hinten.

Auf den Regalplätzen 38 werden dem Kommissionierer 25 die Lagerbehälter 34 präsentiert. Die Regalplätze 38 stellen im Beispiel der Fig. 1 den tiefsten Punkt der Schwerkraftbahnen 32 dar. Der Kommissionierer 25 kann, wenn die Lagerbehälter 34 auf den Regalplätzen 38 stehen, Artikel entnehmen und diese in den Auftragsbehälter 18 geben, der dann auf dem Kommissionierwagen 26 steht.

Die Lagerbehälter 34 sind in der Fig. 1 exemplarisch mit den Buchstaben A, B oder C versehen. Diese Buchstaben sollen die beim Kommissionieren übliche ABC-Einteilung widerspiegeln. Für Regal- bzw. Lagerplätze wird eine ABC-Einteilung üblicherweise in Abhängigkeit von einer Zugriffshäufigkeit vorgenommen. Je häufiger auf einen Artikel zugegriffen wird, desto häufiger muss der diesem Artikel zugeordnete Lagerbehälter 34 dem Kommissionierer 25 präsentiert werden. Artikel, auf die besonders häufig zugegriffen wird, bezeichnet man als A-Artikel. Artikel, auf die weniger häufig zugegriffen wird, nennt man B-Artikel. Artikel, auf die nur selten zugegriffen wird, nennt man C-Artikel. Die Summe aller A-, B- und C-Artikel bildet das gesamte Artikelsortiment und ist gemäß einer ABC-Verteilung (Lorenzkurve) verteilt. Danach sind 20 % des Gesamtsortiments A-Artikel, mit denen jedoch 80 % der Kommissionieraufträge abgearbeitet werden können. Weitere 10 % des Sortiments sind B-Artikel, mit denen weitere 10 % der Kommissionieraufträge abgearbeitet werden können. Die restlichen 70 % des Sortiments dienen zur Abdeckung der letzten 10 %.

Aufgrund der ABC-Verteilung der Kommissionieraufträge bietet es sich an, C-Artikel bzw. C-Lagerbehälter 34 im unteren Bereich des Kommissionierplatzes 22 bereitzustellen. A-Artikel sollten in möglichst unmittelbarer Greifweite des Kommissionierers 25 präsentiert werden. B-Lagerbehälter 34, die weniger häufig als A-Lagerbehälter 34, aber häufiger als C-Lagerbehälter 34 verwendet werden, können z.B. in den höheren Bereichen der Regale 12, 14 angeordnet werden.

Um einen schnellen Austausch der A-Lagerbehälter 34 und der B-Lagerbehälter 34 zu gewährleisten, sind die Schwerkraftbahnen 32, mit Ausnahme der untersten Schwerkraftbahn 32, derart ausgebildet, dass auf einer Entnahmeseite PS, die auch Pick-Seite genannt wird, vorzugsweise immer nur ein Lagerbehälter 34 pro Kanal bereitgestellt wird. Dazu werden die Lagerbehälter 34 von einer Rückseite RS der Regale 12, 14 z.B. mit Hilfe eines nicht gezeigten Regalbediengeräts in die entsprechenden Schwerkraftbahnen 32 eingeführt. Nach einer erfolgten Entnahme von Artikeln werden die (vorerst) nicht mehr benötigten Lagerbehälter 34 vorzugsweise kraftunterstützt von den Regalplätzen 38 nach hinten, in Richtung der Rückseite RS der Regale 12, 14 bewegt, um dort von dem Regalbediengerät wieder aufgenommen zu werden und ggf. auf einem der statischen Lagerplätze 36 abgestellt zu werden. Lagerbehälter 34 können auf den statischen Lagerplätzen 36 auch ausgetauscht werden, um neue Auftragsbehälter 34 in die Schwerkraftbahnen 32 zu geben. Das jeweilige Bereitstellen und Austauschen der Lagerbehälter 34 der oberen Schwerkraftbahnen 32 ist mit Hilfe eines Doppelpfeils angedeutet. Die jeweils untersten Schwerkraftbahnen 32 sind beim Beispiel der Fig. 1 für C-Lagerbehälter 34 reserviert. Da die C-Artikel weniger häufig, mitunter aber doch auch in recht hohen Stückzahlen, benötigt werden können, sind hier die untersten Schwerkraftbahnen 32 hier in Form von Durchschubkanälen implementiert. Die C-Lagerbehälter 34 werden dort nicht zurückgeholt bzw. ausgetauscht, sondern lediglich nachgeführt. Deshalb befinden sich in den untersten Schwerkraftbahnen 32 auch mehrere Lagerbehälter 34 hintereinander angeordnet. Es versteht sich, dass die Anordnung der A-, B- und C-Artikel in Bezug auf die jeweiligen Bereitstellungshöhen beliebig variiert werden kann. Auch das Speisen mit neuen Lagerbehältern und die Rückführung derselben kann auf eine andere Weise, z.B. manuell geschehen.

Damit der Kommissionierer 25 weiß, aus welchem der ihm präsentierten Lagerbehälter 34 Artikel zu entnehmen sind, können am unteren Ende der Regalplätze 38 Leisten 39 vorgesehen werden. Die Leisten 39 können z.B. mit einer Lampe 42 oder einem LED 42 pro Regalplatz 38 ausgestattet sein, wie es nachfolgend noch näher beschrieben werden wird.

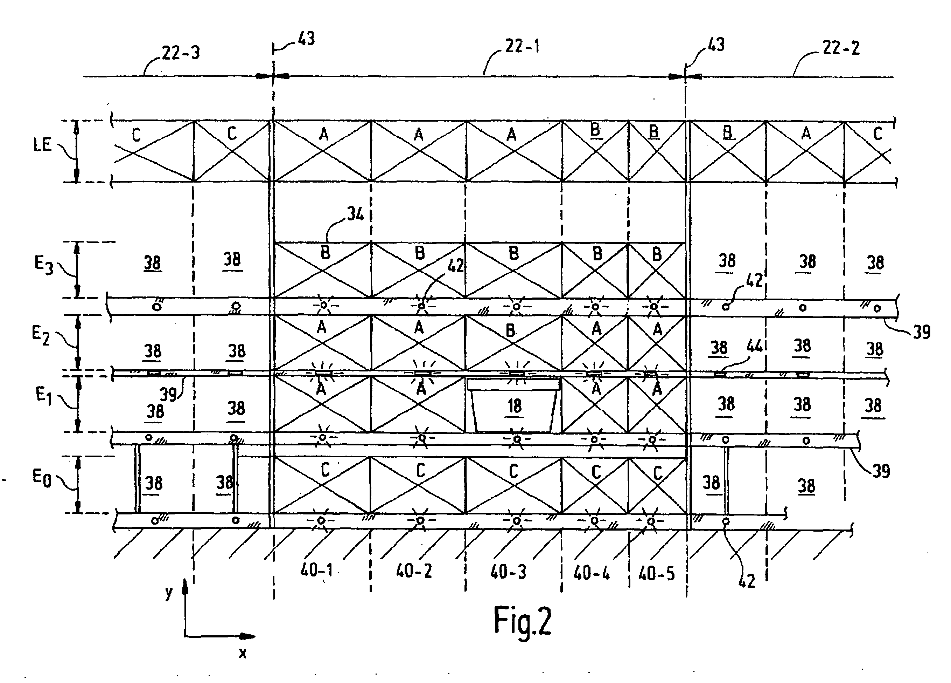

Fig. 2 zeigt eine Ansicht auf die Längsseite des Regals 12 der Fig. 1.

Die Längsseite PS ist in mehrere Bereiche bzw. Zonen unterteilt, die für sich wiederum jeweils einen Kommissionierplatz 22-1, 22-2 bzw. 22-3 definieren. Im Nachfolgenden soll der Kommissionierplatz 22-1 näher beschrieben werden.

Der Kommissionierplatz 22-1 umfasst fünf Regalsäulen 40-1 bis 40-5. Die Lagerbehälter 34 werden in vier Ebenen E0 bis E3 bereitgestellt, wobei die Ebene E0 die unterste Ebene darstellt. Jedem Regalplatz 38, von denen in den Kommissionierzonen bzw. -plätzen 22-2 und 22-3 mehrere frei stehen, ist jeweils ein Signalgeber 42 zugeordnet. Bei dem Signalgeber 42 kann es sich z.B. um die oben erwähnte Lampe, eine LED oder Ähnliches handeln. Die Signalgeber 42 sind hier in der Leiste 39 fixiert. Die Leiste 39 ist jedoch nicht zwingend erforderlich.

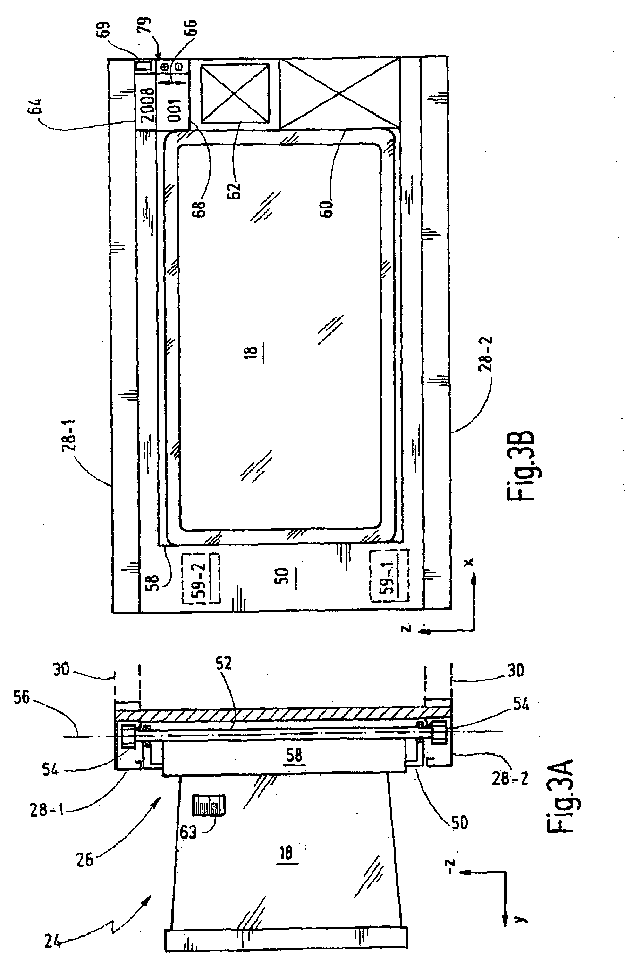

Ferner ist ein Auftragsbehälter 18 am Kommissionierplatz 22-1 gezeigt. Der Auftragsbehälter 18 steht auf Höhe der Ein-/Ausschleusstrecke 20 der Fig. 1. In diesem Bereich können keine Lagerbehälter 34 präsentiert werden. Die Lagerbehälter 34 können jedoch links und rechts von der Ein-/Ausschleusstrecke 20 bereitgestellt werden. Der Auftragsbehätter 18 ist in x-Richtung entlang der Entnahmeseite des Regals beweglich. Die Kommissionierstrecke 26 weist die Führungsschienen 28 auf, die unter Bezugnahme auf Fig. 3A noch näher erläutert werden. Üblicherweise wird der Auftragsbehälter 18 auf der Kommissionierstrecke 24 nur innerhalb des Kommissionierplatzes 22-1 bewegt. Nach erfolgter Kommissionierung wird der Auftragsbehälter 18 wieder über die dem Kommissionierplatz 22-1 zugeordnete Einschleus/Auaschleusstrecke 20 abtransportiert. Die Einteilung der Kommissionierplätze 22-1 bis 22-3 kann jedoch auch dynamisch erfolgen, indem man die äußeren Grenzen 43 zeitweise versetzt. Sollte der Kommissionierer 25, der dem Kommissionierplatz 22-1 zugeordnet ist, z.B. eine Pause machen, so können die äußeren Grenzen 43 während dieser Zeit derart nach innen versetzt werden, dass die Kommissionierplätze 22-2 und 22-3 jeweils um die Hälfte des bisherigen Kommissionierplatzes 22-1 erweitert sind. Die Kommissionierer 25 der Kommissionierplätze 22-2 und 22-3 können dann kurzfristig, und vorzugsweise auch nur kurzweilig, die Arbeit des Kommissionierers 25 übernehmen, der üblicherweise am Kommissionierplatz 22-1 arbeitet.

Ebenso ist es möglich, dass ein Auftragsbehälter 18, für den alle Kommissioniervorgänge am Kommissionierplatz 22-1 abgeschlossen sind, direkt über die Kommissionierstrecke 24 an einen der benachbarten Kommissionierplätze 22-2 bzw. 22-3 transferiert wird. Dies ist immer dann sinnvoll, wenn der Auftragsbehälter 18 am Kommissionierplatz 22-1 nur teilkommissioniert wurde und eine weitere Teilkommissionierung an einem der Kommissionierplätze 22-2 oder 22-3 durchzuführen ist.

Bezug nehmend auf Fig. 3A ist eine Ansicht auf eine Stirnseite einer Kommissionierstrecke 24 gezeigt. Die Kommissionierstrecke 24 weist hier eine rechte Führungsschiene 28-1 und eine linke Führungsschiene 28-2 auf, die sich entlang der Längsseite der Regale 12, 14 erstrecken und vorzugsweise mit diesen verbunden sind. Die Führungsschienen 28 werden abschnittsweise durch Beine des Gestells 30, welches hier mit Hilfe einer Strichlinie dargestellt ist, auf dem Hallenboden abgestützt. Die Führungsschienen 28 sind hier exemplarisch in Form eines C-förmigen Profils realisiert. Die Öffnungen der C-Profile weisen nach innen und bieten Raum für den Durchgang einer Achse 52, die in einem Rahmen 50 des Kommissionierwagens 26 drehbar gelagert ist. An den Enden der Achse 52 sind Laufräder 54 angeordnet, mit denen der Kommissionierwagen 26 in den C-Profilen der Führungsschienen 28 verfahrbar ist, wobei sich die Laufräder 54 um eine Drehachse 56 in beliebiger Richtung drehen lassen. Die Laufräder 54 können angetrieben werden.

Der Kommissionierwagen 26 weist ferner eine Wägezelle 58 auf, um das Leer- bzw. Anfangsgewicht des Auftragsbehälters 18 sowie das Gewicht von zugegebenen Artikeln zu bestimmen. Diese Information kann genutzt werden, um einen Soll-Ist-Vergleich durchführen zu können.

Fig. 3B zeigt eine Draufsicht auf den Kommissionierwagen 26 sowie die Führungsschienen 28 der Fig. 3A, wobei die Führungsschienen 28-1 und 28-2 nur teilweise dargestellt sind. Die Führungsschienen 28 können sich über die ganze Längsseite der Regale 12, 14 erstrecken. Die Führungsschienen 28 sollten sich zumindest über die Länge des Kommissionierplatzes 22 erstrecken.

In der Draufsicht der Fig. 3B blickt man im Wesentlichen in den leeren bzw. teilgefüllten Auftragsbehäiter 18. Der Behälter 18 ist hier so positioniert, dass er im Wesentlichen auf der Wägezelle 58 steht. Die tatsächliche Stellfläche entspricht jedoch im Wesentlichen der Projektionsfläche des Rahmens 50 des Wagens 26.

Der Wagen 26 weist ferner einen Antrieb 60, ein Code-Lesegerät 62, eine Behältemummeranzeige 64, eine Richtungsanzeige 66, eine Artikelstilckzahlanzeige 68, eine Quittiertaste 69 sowie ein Tastenfeld 70 auf. Es versteht sich, dass die eben aufgezählten Komponenten einzeln oder in beliebiger Kombination vorgesehen werden können. Optional kann auch ein Distanzmessgerät 59-1 und/oder ein Positfonferungssystem 59-2 vorgesehen werden.

Mit Hilfe des Antriebs 60 kann der Wagen 26 in den Schienen 28 selbstständig bewegt werden. Es versteht sich, dass der Antrieb 60 auch außerhalb des Wagens 26 angeordnet sein kann. In diesem Fall würde die Mitnahme des Wagens 26 z.B. durch eine entsprechende Rastvorrichtung geschehen, die in einen endlos in einer der Führungsschienen umlaufenden Zahnriemen greift.

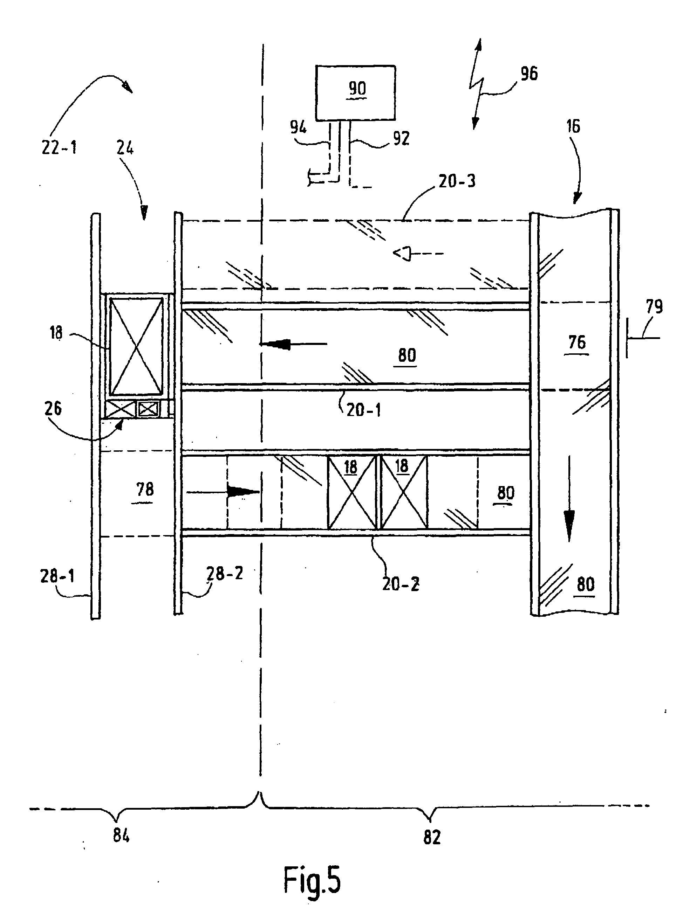

Die Energie zum Betreiben des Antriebs 60 sowie der Anzeigeelemente kann der Kommissionierwagen 26 über hier nicht näher dargestellte Versorgungsleitungen, wie z.B. eine Schleppleitung, eine Schleifleitung, eine induktive Energieversorgung oder Ähnliches, erhalten. Alternativ könnte der Rollwagen 26 mit einem Akkumulator bzw. einem Superkondensator (beide nicht dargestellt) ausgerüstet sein. Wenn ein Akkumulator oder Superkondensator eingesetzt wird, können diese Elemente z.B. an den Haltepositionen, d.h. vor den jeweiligen Regalsäulen, geladen werden. An den Haltepositionen würden dann entsprechende Kontakte vorgesehen werden. Ein idealer Ort zum Laden ist z.B. ein Übergabepunkt, wo Auftragsbehälter zwischen dem Kommissionierwagen 26 und der Ein-/Ausschleusstrecke 20 ausgetauscht werden (vgl. auch Fig. 5).

Das Code-Lesegerät 62 kann z.B. in Form eines Barcode-Scanners oder eines RFID-Lesegeräts implementiert sein. Das Lesegerät 62 kann zum Identifizieren der Behälter und/oder der zu entnehmenden Artikel verwendet werden.

Die Artikelanzahl- bzw. Ziffernanzeige 68 zeigt die Anzahl der aus einem Lagerbehälter 34 in einem der Regalplätze 38 zu entnehmenden Artikel an. Wenn die Regalplätze 38 sowohl links als auch rechts vom Kommissionierer 25 angeordnet sind, wie es im Beispiel der Fig. 1 gezeigt ist, kann zusätzlich eine Richtungsanzeige 66 vorgesehen werden. Die Richtungsanzeige 66 erleichtert dem Kommissionierer 25 das Auffinden des momentan zu bearbeitenden Lagerbehälters 34, indem sie auf die entsprechende Entnahmeseite PS von einem der Regale 12 oder 14 zeigt.

Mit Hilfe der Quittiertaste 69 kann der Kommissionierer 25 einer übergeordneten Steuereinrichtung signalisieren, dass er mit der Abarbeitung einer Auftragszeile bzw. des gesamten Kommissionierauftrags fertig ist. Der Kommissionierer 25 drückt die Quittiertaste 69 üblicherweise dann, wenn er die in der Artikelanzahlanzeige 68 angezeigte Stückzahl aus dem zugeordneten Lagerbehälter 34 vollständig und richtig entnommen und in den Auftragsbehälter 18 abgegeben hat.

Das Tastenfeld 70 der Fig. 3B weist hier lediglich eine Plustaste und eine Minustaste auf. Diese Tasten werden z.B. verwendet, wenn weniger Artikel aus einem Lagerbehälter 34 entnommen werden können, als es eigentlich durch die Anzeige 68 gefordert wird. Zu solchen Situationen kann es kommen, wenn ein höherer Ist-Lagerbestand im System (Lagerverwaltungsrechner, LVR) hinterlegt ist, als tatsächlich Artikel vorhanden sind. Der Kommissionierer 25 kann dann die tatsächlich in den Auftragsbehälter 18 abgegebene Artikelanzahl durch Betätigen der Minustaste kommunizieren.

Die Plustaste kann z.B. zu inventurzwecken eingesetzt werden. Um den Ist-Lagerbestand von Artikeln in den Regalen 12, 14 mit dem Soll-Lagerbestand abzugleichen, kann der Kommissionierer 25 auch ohne Auftragsbahälter 18 mittels des Kommissionierwagens 16 durch die Regalplätze 38 des Kommissionierplatzes 22 geführt werden. Die übergeordnete Steuereinrichtung (LVR) gibt dem Kommissionierer 25 dann vor, welchen Regalplatz 38 er überprüften soll. Sie gibt ihm auch die Anzahl der erwarteten Artikel an. Stimmt diese Anzahl nicht mit der tatsächlichen Anzahl überein, so kann der Kommissionierer 25 die Anzahl durch Betätigen der Plustaste oder der Minustaste korrigieren.

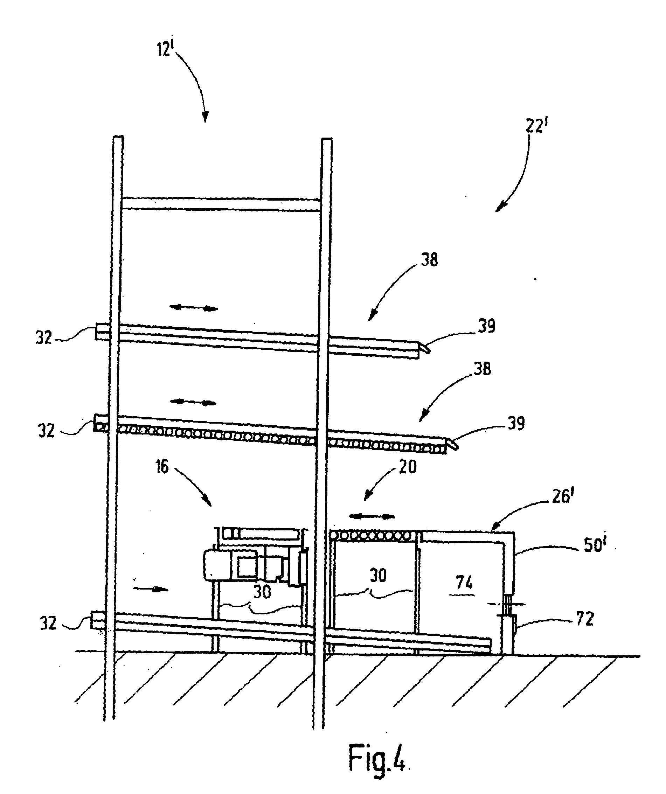

Unter Bezugnahme auf Fig. 4 ist eine ähnliche Ansicht wie in Fig. 1 gezeigt. Der Kommissionierplatz 22' ist ähnlich zu dem Kommissionierplatz 22 der Fig. 1 aufgebaut und unterscheidet sich lediglich darin, dass nur ein einziges Regal 12' und ein abgewandelter Kommissionierwagen 26' eingesetzt wird.

Wenn nur ein Regal eingesetzt wird, können zwei Kommissionierpersonen 25 in der Regalgasse 15 nebeneinander arbeiten (vgl. Fig. 1), d.h. es können zwei Kommissionierplätze nebeneinander in der Regalgasse 15 angeordnet werden. Das rechte Regal 14 der Fig. 1 wäre dann ebenfalls mit einer eigenen Kommissionierstrecke, mit der zu- und abfördernden Fördertechnik 16 für Auftragsbehälter 18 sowie mit einer eigenen Ein-/Ausschleusstrecke 20 versehen.

Der Kommissionierwagen 26' der Fig 4 unterscheidet sich vom bisherigen Kommissionierwagen 26 lediglich in der Ausgestaltung seines Rahmens 50'. Der Rahmen 50' des Kommissionierwagens 26' hat hier im Wesentlichen einen L-förmigen Querschnitt. Die L-förmige Gestalt ermöglicht eine Absenkung einer der dem Kommissionierer zugewandten Fahr- und Führungsschiene 72. Diese Absenkung hat den Vorteil, dass Lagerbehälter einfacher zugänglich sind, die auf der untersten Schwerkraftbahn 32 präsentiert werden. Ein Raum 74, der im Wesentlichen durch eine imaginäre Verschiebebahn des Kommissionierwagens 26 sowie der Ein-/Ausschleusstrecke 20 definiert ist, ist frei von oben zugänglich, da die Führungsschiene 28-2 der Fig. 3A und 3B in Form der Führungsschiene 72 tiefer und somit weniger störend für den Kommissionierer angeordnet ist. Sollte der Kommissionierer Artikel aus einem Lagerbehälter entnehmen müssen, die auf der untersten Schwerkraftbahn 32 gelagert sind, kann der Kommissionierwagen 26' entweder vor oder nach dem jeweiligen Lagerbehälter (Regalsäule) angehalten werden, um dem Kommissionierer einen freien Zugang zu gewähren.

Bezug nehmend auf Fig. 5 ist eine isolierte Draufsicht auf verwendete Fördertechnikkomponenten gezeigt, wie sie im Zusammenhang mit den vorhergehenden Fig. 1 bis 4 eingesetzt werden.

Auftragsbehälter 18 werden über die (Haupt-)Förderstrecke 16 zu den Kommissionierplätzen transportiert und von dort auch wieder abtransportiert. An die Fördertechnik 16 schließt pro Kommissionierplatz vorzugsweise eine Ein-/Ausschleusstrecke 20 an, wie sie in Fig. 1 gezeigt ist. In der Fig. 5 sind zwei Strecken 20-1 und 20-2 gezeigt, auf denen eine Bewegung unidirektional erfolgt. Die Strecke 20-1 dient als Ausschleusstrecke für die Fördertechnik 16. Die Strecke 20-2 dient als Einschleusstrecke für die Fördertechnik 16. Die Strecke 20 könnte aber auch durch eine einzige Bahn realisiert werden, die dann bidirektional betrieben wird.

In einem Übergabebereich 76 der Fördertechnik 16, der direkt an die Ausschleusstrecke 20-1 angrenzt, werden Auftragsbehälter 1B, die dem zugehörigen Kommissionierplatz zugewiesen sind, mit Hilfe einer Ausschleuseinrichtung 79, wie z.B. einem Pusher, in die Ausschleusstrecke 20-1 überführt. Diese Überführung kann z.B.erfolgen, während die Fördertechnik 16 kontinuierlich weiterbetrieben wird. Die Fördertechnik 16 kann aber auch angehalten werden.

Die Ausschleusstrecke 20-1 kann hinsichtlich ihrer Länge variiert werden. In der Fig. 5 ist die Ausschleusetrecke 20-1 so lang, dass sie mehrere Auftragsbehälter 18 hintereinander aufnehmen kann. Die Ausschleusstrecke 20-1, die Einschleusstrecke 20-2 sowie die Fördertechnik 16 sind hier exemplarisch in Form von Gurtförderern 80 implementiert. Andere Fördertechniktypen (Riemenförderer, Kettenförderer, Rollenförderer, etc) können ebenfalls eingesetzt werden.

Der Kommissionierwagen 26 ist wie im Zusammenhang mit der Fig. 3A beschrieben entlang den Führungsschienen 28-1 und 28-2 parallel zur Entnahmeseite PS (vgl. Fig. 1) von einem, oder beiden, der Regale 12, 14 verfahrbar. In der Fig. 5 steht der Kommissionierwagen 26 an einem hier nicht näher bezeichneten Aufnahmepunkt. Der Aufnahmepunkt der Kommissionierstrecke 24 schließt direkt an die Ausschleusstrecke 20-1 an. Der Gurtförderer 80 der Ausschleusstrecke 20-1 kann so Auftragsbehälter 18 eigenständig auf den Kommissionierwagen 26 aufschieben. Danach kann ein Kommissioniervorgang beginnen.

Wenn der Kommissioniervorgang abgeschlossen ist, wird der Kommissionierwagen 26 an einen Abgabepunkt 78 verfahren und dort mittels geeigneter Wegmarkierungen oder mittels eines Distanzmessgeräts angehalten.

Der Abgabepunkt 78 ist mit einer Einrichtung (Greifarmen, Hubriemen, etc.) versehen, die einen automatisierten Abzug des befüllten Auftragsbehälters 18 vom Kommissionierwagen 26 veranlasst. Alternativ kann der Kommissionierwagen 26 selbst über ein zur Abgabe fähiges Lastabgabemittel. wie z.B, einen heb- und senkbaren Riemenförderer, verfügen.

Auch die Ausschleusstrecke 20-2 ist hier wieder so lang gewählt, dass mehrere Auftragsbehälter 28 hintereinander gestaut und sequentiell an die Fördertechnik 16 abgegeben werden können.

Es versteht sich, dass in der Fig. 5 die Regale zur Vereinfachung der Darstellung nicht gezeigt sind. Deshalb ist ergänzend eine imaginäre Hilfslinie dargestellt, die einen Fördertechnikbereich 82 von einem Kommissionierbereich 84 trennt. Im Beispiel der Fig. 1 ist die Fördertechnik 16 in das Regal 12 verbaut. Die Ausschleusstrecke 20-1 und die Einschleusstrecke 20-2 verbinden die Fördertechnik 16 mit der im Kommissionierbereich 84 bzw. am Kommissionierplatz 22 angeordneten Kommissionierstrecke 24.

Die Fördertechnikkomponenten der Fig. 5 sind mit einer übergeordneten Steuereinrichtung 90 verbunden. Die Verbindung kann Ober einzelne Leitungen 92 und/oder ein Bussystem 94 erfolgen. Alternativ können auch drahtlose Verbindungen 96 eingesetzt werden. Weiterhin ist die übergeordnete Steuereinrichtung 90 mit dem Kommissionierwagen 26, um diesen zu verfahren, und mit den Signalgebern 42 der einzelnen Regalplätze 38 verbunden, um die visuelle Kennzeichnung eines Regalplatzes 38 aktivieren zu können.

Sollten die Regalplätze 38 nicht jeweils mit einem Signalgeber 42 versehen sein, z.B. um die Gefahr von Ausfällen und damit verbundenen Kommissionierfehlern zu reduzieren, könnte der Kommissionierwagen 26 alternativ über eine Zeigeeinrichtung (nicht in den Figuren dargestellt) verfügen, wie z.B. einen Laser-Pointer. Mit Hilfe des Laser-Pointers könnten einzelne Regalplätze ausgeleuchtet werden, aus denen Artikel zu entnehmen sind.

Optional kann eine weitere Förderstrecke 20-3 vorgesehen werden. Die hier in Strichlinien angedeutete Strecke 20-3 stellt eine Überholspur zur Ausschleusstrecke 20-1 dar. Wenn ein priorisierter Auftragsbehälter solche Behältern vorgeführt werden soll, die bereits auf der Ausschleus- und Staustrecke 20-1 positioniert sind, kann dieser Auftragsbehälter über die Strecke 20-3 "überholen". Ähnliches gilt für die Einschleusung eines priorisierten Behälters. Dafür kann eine weitere Einschleusstrecke (nicht dargestellt) vorgesehen werden, die ebenfalles vorzugsweise parallel zu den Strecken 20-1, 20-2 und/oder 20-3 orientiert ist und zum "Überholen" in Richtung der Fördertechnik 16 dient.

Nachfolgend wird ein Kommissioniervorgang beschrieben werden.

Ein für einen bestimmten Kommissionierplatz 22 ausgewählter Auftragsbehälter 18 wird z.B. mit Hilfe eines Materialflussrechners über die Fördertechnik 16 an eine Ein-/ Ausschleusstrecke 20 eines zugehörigen Kommissionierplatzes 20 gelenkt. Am Kommissionierplatz 22 angekommen wird der Auftragsbehäfter 18 automatisiert auf einen bereitstehenden Kommissionierwagen 26 gegeben. Ein Kommissionierer 25 muss dabei nicht Hand anlegen. Sobald der Auftragsbehälter 18 auf dem Kommissionierwagen 26 ist, beginnt der Kommissioniervorgang, d.h. die Abarbeitung einzelner Auftragszeilen, die diesem Kommissionierplatz 22 zugeordnet sind.

Der Kommissionierwagen 26 verfährt selbstständig, gesteuert durch eine übergeordnete Steuereinrichtung 90, mit Hilfe eines Antriebs 60 an eine Halteposition, die vorzugsweise auf Höhe einer Regalsäule 40 liegt, in welcher sich ein Regalplatz 38 befindet, in dem ein Lagerbehälter 38 bereitgestellt ist, der zu entnehmende Artikel enthält. Der entsprechende Regalplatz 38 wird z.B. mit Hilfe einer Lampe 42 erleuchtet. Da sonst kein anderer Regalplatz leuchtet, ist es für einen Kommissionierer 25 ein Leichtes, in den richtigen Lagerbehälter 34 zu greifen.

Der Kommissionierer 25 bekommt über den Kommissionierwagen 26 angezeigt, wie viele Artikel er entnehmen soll. Sollte der Kommissionierbereich 22 beide Seiten einer Regalgasse umfassen, kann der Kommissionierer 25 mit Hilfe einer Richtungsanzeige 66 angezeigt bekommen, auf welcher Seite der Regalgasse sich der gerade abzuarbeitende Lagerbehälter 34 befindet.

Sobald der Kommissioniereer 25 die erforderliche Anzahl von Artikeln entnommen hat, bestätigt er dies durch Betätigen einer Quittiertaste 69.

Um Fehlkommissionierungen auszuschließen, kann der Kommissionierer 25 sowohl eine ID-Kennung des Auftragsbehätters 18 und/oder einen Artikelcode der zu entnehmenden Artikel mit Hilfe eines Scanners 62 verifizieren.

Diesen soeben für einen ersten Artikel beschriebenen Kommissioniervorgang wiederholt der Kommissionierer 25 so oft, bis alle Auftragszeilen eines Kommissionierauftrags abgearbeitet sind. Die übergeordnete Steuereinrichtung 90 verfährt den Kommissionierwagen 26 dabei so, dass der Wagen 26 immer möglichst nahe an dem gerade zu bearbeitenden Regalplatz 38 angeordnet ist.

Nach Beendigung des Kommissionierauftrags verfährt der Kommissionierwagen 26 selbstständig zu einem Abgabepunkt 78, wo der fertige Auftragsbehälter 18 vorzugsweise kraftunterstützt an die Ein-/Ausschleusstrecke 20 abgegeben wird. Dort wird der Auftragsbehälter 18 dann in die Fördertechnik 16 eingeschleust und verlässt den Kommissionierplatz 22.

## Patentansprüche

1. Kommissionieranlage (10) mit einem Regal (12, 14), mit einer Fördertechnik (16), um Auftragsbehälter (18) durch die Anlage (10) zu transportieren, und mit mindestens einem Kommissionierplatz (22; 22'), an welchem Artikel manuell gemäß einem Kommissionierauftrag aus Lagerbehältern (34) in einen der Auftragsbehälter (18) gegeben werden, wobei der Kommissionierplatz (22; 22') einen am Regal (12, 14) geführten Kommissionierwagen (26) und eine Vielzahl von Regalplätzen (38), in denen Lagerbehälter (34) zur Entnahme von Artikeln bereitstellbar sind, aufweist, wobei der Kommissionierwagen (26) eine Anzeigevorrichtung (68) aufweist, die einem Kommissionierer (25) eine Anzahl von aus einem Lagerbehälter (34) zu entnehmenden Artikeln anzeigt, wobei jedem Regalplatz (38) ein Signalgeber (42) zugeordnet ist, der dem Kommissionierer (25) anzeigt, aus welchem der Regalplätze (38) gerade ein oder mehrere Artikel zur Abarbeitung des Kommissionierauftrags zu entnehmen ist bzw. sind und wobei der Kommissionierwagen (26) eine Wägezelle (58) aufweist.

2. Anlage nach Anspruch 1, wobei der Kommissionierwagen (26) einen Antrieb (60) aufweist, um sich selbsttätig entlang der Regalplätze (38) zu bewegen.

3. Anlage nach Anspruch 1 oder 2, wobei der Kommissionierwagen (26) über eine Schleifleitung in einer Führungsschiene (28) am Regal (12, 14), über eine Schleppleitung, induktiv oder von einem in den Wagen (26) integrierten Energiespeicher, insbesondere einer Batterie, einem Akku oder einem Superkondensator, mit Energie versorgt wird.

4. Anlage nach Anspruch 1, wobei der Kommissionierwagen (26) mittels eines externen Antriebs, vorzugsweise mit einem extern angetriebenen Zahnriemen, automatisiert bewegt wird.

5. Anlage nach einem der vorhergehenden Ansprüche, wobei der Kommissionierplatz (22) ein zweites Regal (14; 12) aufweist, welches derart gegenüberliegend zum ersten Regal (12, 14) angeordnet ist, dass zwischen den Regalen (12, 14) eine Kommissioniergasse (15) gebildet wird, und wobei der Kommissionierwagen (26) vorzugsweise eine Richtungsanzeige (66) aufweist, um dem Kommissionierer (25) anzuzeigen, aus welcher Regalseite (PS) Artikel zu entnehmen sind.

6. Anlage nach einem der vorhergehenden Ansprüche, wobei der Kommissionierwagen (26) zusätzlich eine Code-Leseeinheit (62), insbesondere einen Barcode-Scanner oder ein RFID-Lesegerät, aufweist.

7. Anlage nach einem der vorhergehenden Ansprüche, wobei der Kommissionierwagen (26) ferner ein Distanzmessgerät (59-1) aufweist.

8. Anlage nach einem der vorhergehenden Ansprüche, wobei der Kommissionierwagen (26) ferner ein Positionierungssystem (59-2) aufweist.

9. Anlage nach einem der vorhergehenden Ansprüche, wobei der Kommissionierwagen (26) ferner eine Zeigeeinrichtung aufweist, um dem Kommissionierer mittels eines optischen Strahls den Regalplatz (38) anzuzeigen, in welchem der Lagerbehälter (34) gelagert ist, aus dem gerade Artikel zu entnehmen sind.

10. Anlage nach einem der vorhergehenden Ansprüche, wobei der Kommissionierwagen (26) ferner eine Quittiertaste (69) aufweist.

11. Anlage nach einem der vorhergehenden Ansprüche, wobei der Kommissionierwagen (26) ein Tastenfeld (70) aufweist, mit dem einer übergeordneten Steuereinheit (90) eine Anzahl tatsächlich entnommener Artikel signalisiert werden kann, sollte der entnommene Artikel nicht in einer benötigten Anzahl vorhanden sein.

12. Anlage nach einem der vorhergehenden Ansprüche, die ferner eine übergeordnete Steuereinrichtung (90) aufweist, die eingerichtet ist, den Kommissionierwagen (26) dazu zu veranlassen, sich nach einer erfolgreichen Entnahme eines ersten Artikels vor, vorzugsweise direkt vor, einem Regalplatz (38) zu positionieren, der einen Lagerbehälter (34) mit zweiten Artikeln speichert, die als nächstes zu entnehmen sind.

13. Anlage nach einem der vorhergehenden Ansprüche, wobei die Fördertechnik (16) innerhalb des Regals (12, 14) oder angrenzend an das Regal (12, 14) verläuft und über eine Ausschleusstrecke (20; 20-1) und eine Einschleusstrecke (20; 20-2) mit einer Strecke (24) verbunden ist, auf der der Kommissionierwagen (26) entlang einer Regalentnahmeseite (PS) geführt ist.

14. Anlage nach einem der vorhergehenden Ansprüche, wobei eine weitere Förderstrecke (20-3) angeordnet ist.

15. Anlage nach Anspruch 12 oder 13, wobei die Strecke (24) eine oder mehrere Führungsschienen (28-1, 28-2, 72) aufweist, die im Wesentlichen parallel zur Regalentnahmeseite (PS) verlaufen, und wobei die Steuereinrichtung (90) eingerichtet ist, Auftragsbehälter (18) aus der Fördertechnik (16) über die Ausschleusstrecke (20; 20-1) auf den Kommissionierwagen (26) auszuschleusen und nach einer abgeschlossenen Kommissionierung über die Einschleusstrecke (20; 20-2) auf die Fördertechnik (16) einzuschleusen.

16. Anlage nach Anspruch 12, wobei die Steuereinrichtung (90) eingerichtet ist, zu veranlassen, dass der Kommissionierwagen (26) auf Höhe eines gerade zu bearbeitenden Lagerbehälters (34) verfahren wird, dass ein Regalplatz (38) angezeigt wird, der den gerade zu bearbeitenden Lagerbehälter (34) gespeichert hat, und dass eine Anzahl von gerade zu entnehmenden Artikel angezeigt wird.

17. Anlage nach einer der vorhergehenden Ansprüche, wobei der Signalgeber (42) jeweils eine Lampe aufweist und jedem Regalplatz (38) eine Lampe zugeordnet ist.

18. Verfahren zum Abarbeiten eines Kommissionierauftrags in einer Kommissionieranlage (10), die gemäß einem der vorhergehenden Ansprüche eingerichtet ist, mit den folgenden Schritten:
Ausschleusen (S1) eines Auftragsbehälters (18) auf einen Kommissionierwagen (26);
Betätigen eines Antriebs (60) des Kommissionierwagens (16) derart, dass der Kommissionierwagen (16) geführt an einen Regalplatz (38) verfahren (S3) und davor angehalten wird,
der einen Lagerbehälter (34) mit gerade zu entnehmenden Artikeln enthält;
Anzeigen (S4) des Regalplatzes (38) am Regal (12, 14), der die gerade zu entnehmenden Artikel enthält;
Anzeigen (S4) einer Anzahl von gerade zu entnehmenden Artikeln am Kommissionierwagen (26) und Entnehmen (S5) der Artikel;
Wiegen des Behälters mit den entnommenen Artikeln und vergleichen des so bestimmten Gewichts mit einem vorgegebenen Gewicht;
Wiederholen (S6) der vorhergehenden Schritte mit Ausnahme des Ausschleusschritts (S1) bis alle Artikel eines Kommissionierauftrags entnommen sind;
Einschleusen (S7) des fertig kommissionierten Auftragsbehälters in eine Fördertechnik (16).

## Claims

1. Picking system (10) with a rack (12, 14), with conveying technology (16) to transport order containers (18) through the system, and with at least one picking position (22; 22'), on which articles are manually placed from storage containers (34) into one of the order containers (18) according to a picking order, wherein the picking position (22; 22') has a picking carriage (26) guided on the rack (12, 14) and a large number of rack positions (38), in which storage containers (34) can be provided to remove articles, wherein the picking carriage (26) has a display device which displays a number of articles to be removed from a storage container (34) to a picker (25), each rack position (38) being allocated a signal transmitter (42), which displays to the picker (25) from which of the rack positions (38) one or more articles is or are currently to be removed to process the picking order and wherein the picking carriage (26) has a weighing cell (58).

2. System according to claim 1, wherein the picking carriage (26) has a drive (60), in order to be automatically moved along the rack positions (38).

3. System according to claim 1 or 2, wherein the picking carriage (26) is supplied with energy by means of a conductor line in a guide rail (28) on the rack (12, 14), by means of a trailing line, inductively or by an energy store, which is integrated in the carriage (26), in particular a battery, an accumulator or a super capacitor.

4. System according to claim 1, wherein the picking carriage (26) is moved in an automated manner by means of an external drive, preferably with an externally driven toothed belt.

5. System according to any one of the preceding claims, wherein the picking position (22) has a second rack (14; 12) which is arranged opposing the first rack (12, 14) in such a way that a picking channel (15) is formed between the racks (12, 14), and wherein the picking carriage (26) preferably has a direction display (66) in order to display to the picker (25), from which rack side (PS) articles are to be removed.

6. System according to any one of the preceding claims, wherein the picking carriage (26) additionally has a code reading unit (62), in particular a barcode scanner or an RFID reading apparatus.

7. System according to any one of the preceding claims, wherein the picking carriage (26) also has a distance measuring apparatus (59-1).

8. System according to any one of the preceding claims, wherein the picking carriage (26) also has a positioning system (59-2).

9. System according to any one of the preceding claims, wherein the picking carriage (26) also has a pointing device in order to display to the picker, by means of an optical beam, the rack position (38), in which the storage container (34) is stored, from which articles are currently to be removed.

10. System according to any one of the preceding claims, wherein the picking carriage (26) also has an acknowledgement button (69).

11. System according to any one of the preceding claims, wherein the picking carriage (26) has a keypad (70), with which a number of actually removed articles can be signalled to a superordinate control unit (90), if the article removed should not be present in a required number.

12. System according to any one of the preceding claims, which also has a superordinate control device (90), which is set up to cause the picking carriage (26), once a first article has been successfully removed, to be positioned in front of, preferably directly in front of, a rack position (38), which stores a storage container (34) with second articles, which are to be removed next.

13. System according to any one of the preceding claims, wherein the conveying technology (16) runs within the rack (12, 14) or adjacent to the rack (12, 14) and is connected by an export transfer section (20; 20-1) and an import transfer section (20; 20-2) to a section (24), on which the picking carriage (26) is guided along a rack removal side (PS).

14. System according to any one of the preceding claims, wherein a further conveying section (20-3) is arranged.

15. System according to claim 12 or 13, wherein the section (24) has one or more guide rails (28-1, 28-2, 72), which run substantially parallel to the rack removal side (PS), and wherein the control device (90) is set up to transfer order containers (18) out of the conveying technology (16) via the export transfer section (20; 20-1) onto the picking carriage (26) and, after a picking is completed, to transfer them via the import transfer section (20; 20-2) onto the conveying technology (16).

16. System according to claim 12, wherein the control device (90) is set up to cause the picking carriage (26) to be moved to the level of a storage container (34) to be currently processed, in that a rack position (38) is displayed, which has stored the storage container (34) to be currently processed, and in that a number of articles to be currently removed is displayed.

17. System according to any one of the preceding claims, wherein the signal transmitter (42) in each case has a lamp and each rack position (38) is allocated a lamp.

18. Method for processing a picking order in a picking system (10), which is set up according to any one of the preceding claims, with the following steps:
Exporting (S1)of an order container (18) onto a picking carriage (26);
Actuating a drive (60) of the picking carriage (16) in such a way that the picking carriage (16) is moved (53) in a guided manner to a rack position (38) and is stopped in front of the one containing a storage container (34) with articles to be currently removed;
Displaying (S4) the rack position (38) at the rack (12, 14), which contains the articles to be currently removed;
Displaying (54) a number of articles to be currently removed at the picking carriage (26) and removing (S5) the articles;
Weighing the container with the removed articles and comparing the weight thus determined with a predetermined weight;
Repeating (S6) the preceding steps with the exception of the exporting step (S1) until all the articles of a picking order have been removed;
Importing (S7) of the order container, which has been completely picked, into conveyor technology (16).

## Revendications

1. Installation de préparation (10) comprenant un rayonnage (12, 14), comprenant une technique de manutention (16), pour transporter des récipients de commandes (18) dans l'installation (10), et avec au moins un poste de préparation (22, 22') où des articles sont disposés manuellement selon une commande à préparer à partir de récipients de stockage (34) dans l'un des récipients de commandes (18), le poste de préparation (22, 22') présentant un chariot de préparation (26) piloté sur le rayonnage (12, 14) et un grand nombre de postes de rayonnage (38) dans lesquels des récipients de stockage (34) peuvent être prêts pour le prélèvement d'articles, le chariot de préparation (26) présentant un dispositif d'indication (68) qui indique à un préparateur (25) un certain nombre d'articles à prélever à partir d'un récipient de stockage (34), un dispositif d'émission d'un signal (42) étant associé à chaque poste de rayonnage (38), dispositif qui indique au préparateur (25) à partir de quels postes du rayonnage (38) exactement un ou plusieurs articles sont à prélever pour la réalisation de la commande de préparation, et le chariot de préparation (26) présentant une cellule de pesée (58).

2. Installation selon la revendication 1, le chariot de préparation (26) présentant une motorisation (60) pour se déplacer en autonomie le long des postes de rayonnages (38).

3. Installation selon les revendications 1 ou 2, le chariot de préparation (26) étant alimenté en énergie par une ligne de contact dans un rail de guidage (28) sur le rayonnage (12, 14), par une ligne accompagnante, inductive ou alimentée par un accumulateur d'énergie intégré au chariot (26) en particulier une batterie, un accumulateur ou un supercondensateur.

4. Installation selon la revendication 1, le chariot de préparation (26) étant déplacé de manière automatisée par une motorisation externe, de préférence à l'aide d'une courroie dentée à entraînement externe.

5. Installation selon l'une des revendications précédentes, le poste de préparation (22) présentant un deuxième rayonnage (14 ; 12) qui est agencé de telle manière par rapport au premier rayonnage (12, 14) qu'une allée de préparation (15) se trouve formée entre les rayonnages (12, 14), et le chariot de préparation (26) présentant de préférence une indication de direction (66) pour indiquer au préparateur (25) à partir de quel côté du rayonnage (PS) l'article doit être prélevé.

6. Installation selon l'une des revendications précédentes, le chariot de préparation (26) présentant en outre une unité de lecture de code (62), en particulier un scanner de code-barres ou un appareil de lecture RFID.

7. Installation selon l'une des revendications précédentes, le chariot de préparation (26) présentant en outre un appareil de mesure de distance (59-1).

8. Installation selon l'une des revendications précédentes, le chariot de préparation (26) présentant en outre un système de positionnement (59-2).

9. Installation selon l'une des revendications précédentes, le chariot de préparation (26) présentant en outre un dispositif de pointage pour indiquer au préparateur au moyen d'un rayonnement optique le lieu du rayonnage (38) où est stocké le récipient de stockage (34) d'où justement l'article doit être prélevé.

10. Installation selon l'une des revendications précédentes, le chariot de préparation (26) présentant en outre une touche d'acquittement (69).

11. Installation selon l'une des revendications précédentes, le chariot de préparation (26) présentant un panneau de touches (70) par lequel un nombre d'articles effectivement prélevés peut être signalé au moyen d'une unité de pilotage (90), au cas où l'article prélevé ne serait pas présent en un nombre nécessaire.

12. Installation selon l'une des revendications précédentes, qui présente en outre une unité de pilotage (90) qui est conçue pour faire en sorte que le chariot de préparation (26) se positionne, après un premier prélèvement réalisé avec succès d'un premier article, directement devant un poste de rayonnage (38), qui contient dans un récipient de stockage (34) le deuxième article qui est le suivant à prélever.

13. Installation selon l'une des revendications précédentes, le convoyage (16) s'effectuant à l'intérieur du rayonnage (12, 14) ou aux abords du rayonnage (12, 14) et étant reliée à un chemin de sortie (20 ; 20-1) et à un chemin d'entrée (20 ; 20-2) avec un chemin (24) sur lequel le chariot de préparation (26) est piloté le long d'un côté de prélèvement de rayonnage (PS).

14. Installation selon l'une des revendications précédentes où une moyen de transport (20-3) est agencée.

15. Installation selon les revendications 12 ou 13, le chemin (24) présentant un ou plusieurs rails de guidage (28-1, 28-2, 72) qui, dans l'ensemble, s'étendent parallèlement au côté de prélèvement du rayonnage (PS), et où l'unité de pilotage (90) est conçue pour évacuer des récipients de commandes (18) à partir du convoyage (16) par le chemin de sortie (20 ; 20-1) sur le chariot de préparation (26) et après une préparation parachevée, les introduire par le chemin d'entrée (20 ; 20-2) sur le convoyage (16).

16. Installation selon la revendication 12, l'unité de pilotage (90) étant conçue pour que le chariot de préparation (26) soit mené à la hauteur du récipient de stockage (34) qui est justement concerné, qu'un poste de rayonnage (38), que le récipient de stockage (34) en cours de traitement a mis en mémoire, soit indiqué, et que le nombre des articles à prélever exactement soit indiqué.

17. Installation selon l'une des revendications précédentes, le dispositif d'émission de signal (42) présentant une lampe et qu'une lampe se trouve respectivement agencée à chaque poste de rayonnage (38).

18. Procédé de réalisation d'une préparation de commandes dans une installation de préparation (10) qui est conçue selon l'une des revendications précédentes, avec les étapes suivantes :
évacuation (S1) d'un récipient de commandes (18) sur un chariot de préparation (26) ;
activation d'une motorisation (60) du chariot de préparation (16) de telle manière que le chariot de préparation (16) est guidé (S3) jusqu'à un poste de rayonnage (38), et est arrêté devant, poste qui contient le récipient de stockage (34) avec exactement les articles à prélever ;
indication (S4) du poste de rayonnage (38) sur le rayonnage (12, 14) qui contient exactement les articles à prélever ;
indication (S4) d'un nombre d'articles exactement à prélever sur le chariot de préparation (26) et prélèvement (S5) des articles ;
pesée du récipient avec les articles prélevés et comparaison du poids ainsi estimé avec un poids pré indiqué ;
répétition (S6) des étapes précédentes à l'exception de l'étape d'évacuation (S1) jusqu'à ce que tous les articles d'une commande à préparer soient prélevés ;
introduction (S7) du récipient de la commande préparée terminée dans un convoyage (16).
